(19) Europäisches Patentamt
European Patent Office
Office européen des brevets

(11) **EP 3 840 201 A1**

(12) **EUROPEAN PATENT APPLICATION**

(43) Date of publication:
**23.06.2021 Bulletin 2021/25**

(21) Application number: **19217030.6**

(22) Date of filing: **17.12.2019**

(51) Int Cl.:
*H02M 1/32* (2007.01)  *H02M 5/458* (2006.01)
*H02M 5/42* (2006.01)  *H02M 5/45* (2006.01)
*H02M 7/06* (2006.01)  *H02M 7/5387* (2007.01)
*H02P 29/024* (2016.01)  *H02P 29/028* (2016.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **ABB Schweiz AG
5400 Baden (CH)**

(72) Inventors:
• **Pätäri, Ville-Matti
00380 Helsinki (FI)**
• **Kallio, Samuli
00380 Helsinki (FI)**

(74) Representative: **Kolster Oy Ab
Salmisaarenaukio 1
P.O. Box 204
00181 Helsinki (FI)**

(54) **SUPPLY CURRENT LIMITATION**

(57) A method of limiting supply current of a frequency converter and a frequency converter. The method comprises providing a supply current limit, determining the DC-link voltage of the frequency converter, determining the output power of the frequency converter, determining an output power limit based on the supply current limit, the determined DC link voltage and the determined output power, and limiting the output power of the frequency converter to the determined output power limit for limiting the supply current to the provided supply current limit.

FIG 1

EP 3 840 201 A1

**Description**

FIELD OF THE INVENTION

The invention relates to limitation of supply current of a frequency converter.

BACKGROUND OF THE INVENTION

Frequency converters are used commonly in controlling the operation of an electrical motor. Frequency converters are typically connected to an alternating voltage network which supplies power to the frequency converter. A voltage source frequency converter comprises a rectifier, a DC voltage link and an inverter. The rectifier rectifies the inputted AC voltage to a DC voltage of the DC link. The DC link or DC bus smooths the DC voltage which is further fed to the inverter. The inverter produces an AC voltage which is fed to the load. The amplitude and the frequency of the produced AC voltage can be controlled in a desired manner. For example, the rotation speed of the motor connected to the output of the frequency converter can be controlled with the frequency converter.

In some frequency converter installations supply current requires to be limited to protect the supply cabling. The supply cabling can be protected with additional hardware. The supply current can be measured directly and based on the measurement current can be limited to protect the cables. Another known alternative is to use overload protection. In practice, overload protection would cut the supply once a limit is exceeded. Both of the above examples require additional components and structures which lead to increased installation costs as additional components are required and wired to the system. Further, the maintenance costs are also increased as additional spare parts need to be stored and installed.

BRIEF DESCRIPTION OF THE INVENTION

An object of the present invention is to provide a method and an apparatus for implementing the method so as to solve the above problem. The object of the invention is achieved by a method and an apparatus which are characterized by what is stated in the independent claims. The preferred embodiments of the invention are disclosed in the dependent claims.

The invention is based on the idea of limiting the output power of a frequency converter such that the supply current limit is not exceeded. The output power limit is calculated based on electrical quantities which are typically measured or estimated also for other purposes in frequency converters. The electrical quantities to which the limitation is based are the DC link voltage and the electrical output power. Based on these values, the supply current can be limited to a desired value without any additional hardware components or wiring.

An advantage of the method and apparatus of the invention is that the limitation of the supply current can be achieved without any additional components. The limitation of the supply current can be given as a parameter to the frequency converter. Thus a user can set the limit directly to the device when the supply current needs to be limited.

BRIEF DESCRIPTION OF THE DRAWINGS

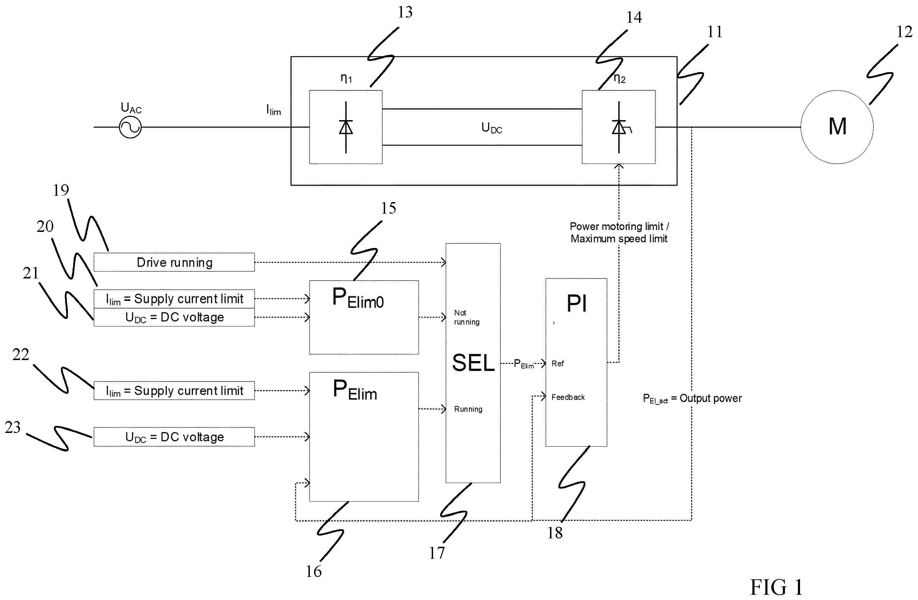

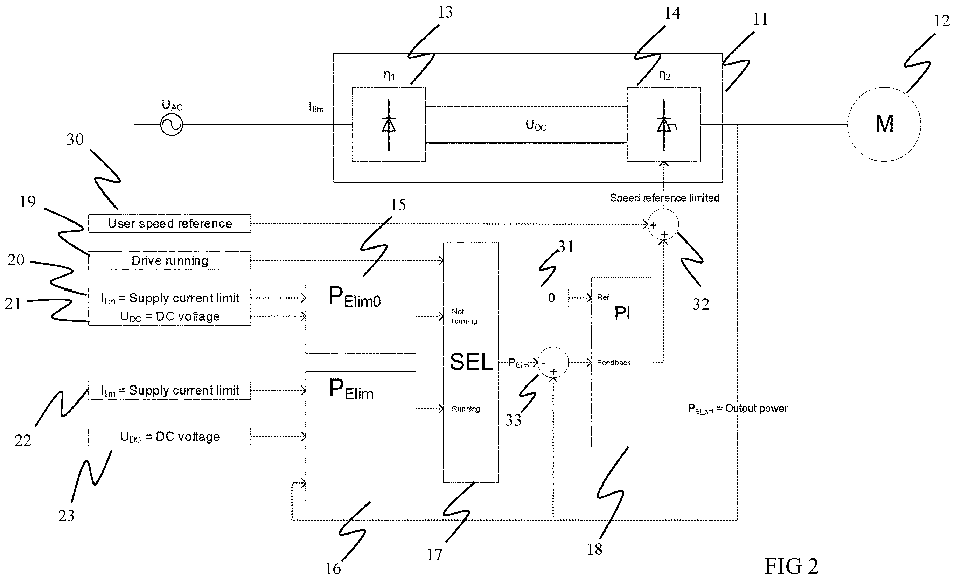

In the following the invention will be described in greater detail by means of preferred embodiments with reference to the attached drawings, in which
Figures 1 and 2 shows block diagrams of the embodiment of the invention.

DETAILED DESCRIPTION OF THE INVENTION

Figure 1 shows a block diagram of a control circuit implementing an embodiment of the invention. A frequency converter 11 is shown in Figure 1 to be connected to a supplying AC network and feeding power to a motor 12. The frequency converter comprises a rectifier 13 and an inverter 14 which are connected together with a DC link having a voltage $U_{DC}$. As known, the rectifier rectifies the AC voltage $U_{AC}$ to a DC voltage $U_{DC}$. The DC voltage is transformed to AC voltage and fed to the motor 12.

In the invention a supply current limit $I_{lim}$ is provided. The supply current refers to the current which is drawn by the frequency converter from the AC network. The supply current limit is the limit value set for the input current by the user. The supply current limit is selected to be in a value which does not exceed the capacity of the supply cabling. The supply current limit is further provided by the user and it is given preferably as a parameter directly to the frequency converter. In Figure 1, the supply current limit is shown to be provided to the block diagram with inputs 20 and 22.

Further in the method, the DC-link voltage UDC of the frequency converter is determined. The DC link voltage is commonly used measured or estimated value in a frequency converter. The DC link voltage may be used, for example, in connection with control of the frequency converter. In Figure 1, the DC link voltage is shown to be provided to the block diagram with inputs 21 and 23.

Further in the method, the output power of the frequency converter is determined. As with DC link voltage, the output power $P_{EI\_act}$ can be already used in the control of the frequency converter. The output power can be calculated from the output current and voltage which are known values in a typical frequency converter.

Based on the given supply current limit, the determined DC link voltage and the determined output power, an output power limit is determined and the output power of the frequency converter is limited to the determined output power limit. Once the output power of the frequency converter is limited to the determined limit, the supply current is also limited to the provided supply current limit.

Figure 1 shows two calculation blocks 15 and 16. The calculation block 15 calculates the output power limit for a situation in which the frequency converter is not loaded while the calculation block 16 produces the output power limit for a situation when the drive is running and loaded. A selection block 17 receives drive running 19 information, and selects its output based on the run information. The output of the selection block is the active output power limit $P_{Elim}$ to which the output power of the frequency converter is limited.

In the embodiment of Figure 1, the output power limit $P_{Elim}$ is fed to a PI-controller 18 (Proportional-Integral controller) as a reference value. The controller receives also the output power of the frequency converter $P_{EI\_act}$ which is also fed to the calculation block 16. The output of the PI-controller 18 is shown to be connected to the inverter of the frequency converter. Based on the output power of the frequency converter and the output power limit, the controller acts to limit the output power of the frequency converter.

When the frequency converter is not loaded, the calculation block 15 calculates output power limit based on the given supply current limit and the determined DC voltage. Without load, supply voltage can be calculated from the measured DC voltage:

$$U_{AC} = \frac{U_{DC}}{\sqrt{2} \cdot 0{,}995} \qquad (1)$$

and furthermore, the output power limit can be calculated with the following equation:

$$P_{Elim0} = \sqrt{3} U_{AC} \cdot I_{lim} \cdot \eta \cdot PF = \frac{\sqrt{3} U_{DC}}{\sqrt{2} \cdot 0{,}995} \cdot I_{lim} \cdot \eta \cdot PF \qquad (2)$$

Where

$U_{DC}$ Measured DC voltage [V]
$I_{lim}$ User set supply current limit [A]
$\eta$ Drive efficiency (e.g. 0,98)
$PF$ Diode bridge true power factor (e.g. 0,85)

Similar result can be obtained using current conversion from DC to AC ($I_{AC} = 0.82 \cdot I_{DC}$) and calculating the DC power limit first.

$$P_{DC\_limit} = U_{DC} \cdot I_{DC\_lim} = U_{DC} \cdot \frac{I_{lim}}{0{,}82} \cdot \eta_1 \qquad (3)$$

From DC power limit, the output power limit can be calculated as:

$$P_{Elim0} = P_{DC} \cdot \eta_2 \cdot PF = U_{DC} \cdot \frac{I_{lim}}{0{,}82} \cdot \eta_1 \cdot \eta_2 \cdot PF = U_{DC} \cdot \frac{I_{lim}}{0{,}82} \cdot \eta \cdot PF \qquad (4)$$

where

$U_{DC}$ Measured DC voltage [V]
$I_{lim}$ User set supply current limit [A]
$\eta$ Drive efficiency (e.g. 0,98)

η1     Diode supply efficiency (e.g. 0,99)
η2     Inverter efficiency (e.g. 0,99)
PF     Diode bridge true power factor (e.g. 0,85)

When the frequency converter is loaded, block 16 calculates the output power limit by first producing an estimate of the supply voltage

$$\widetilde{U}_{AC} = \frac{U_{DC}}{\sqrt{2}} \cdot \left( k P_{El_{act}} + d \right) \tag{5}$$

Using the estimated supply voltage to calculate the output power limit as

$$P_{Elim} = \widetilde{U}_{AC} \cdot \sqrt{3} \cdot I_{lim} \cdot \left( a P_{El_{act}}{}^2 + b P_{El_{act}} + c \right) \tag{6}$$

where

$U_{DC}$     Measured DC voltage [V]
$I_{lim}$     User set supply current limit [A]
$P_{El\_act}$     Output power of inverter [% of drive's nominal power]
k     Slope (e.g. 0,011)
d     Constant offset (e.g. 1,032)
a     Polynomial function coefficient (e.g. -0,239)
b     Polynomial function coefficient (e.g.0,441)
c     Polynomial function coefficient (e.g. 0,7)

The output power limit $P_{Elim}$ is thus calculated based on the estimated supply voltage and the supply current limit and further based on the actual output power. The polynomial function that takes into account the actual output power has a value lower than one in the considered range as the output power is presented in the equation as percentage of drive's nominal power.

In an embodiment of the invention, the output power limit is calculated as a function of actual output power and estimated DC link voltage. In the above embodiment, the actual output power is used as a variable in a second order polynomial function. The above polynomial function can also be approximated with lines having differing slopes. For example three lines can be used to approximate a polynomial function with required accuracy. As in connection with the above polynomial function, the approximation with lines produces value which depends on the output power of the frequency converter and has a value lower than one.

The values of the above presented constants k, d, a, b and c have been found to be suitable for taking into account the load conditions of the frequency converter in providing the output power limit. It is, however, clear that the constants may have other values which are usable in the purpose of determining the output power limit.

In the embodiment of Figure 1, the drive running information from block 19 is fed to the selection block 17, and the selection block 17 operates to output the appropriate value to the PI controller 18. In Figure 1 the output of the PI controller is limited to user given maximum power or rotational speed. Thus the output of the controller cannot exceed the set maximum value. The controller operates to provide either a power limit or maximum rotational speed limit to the frequency converter based on the actual output power and the power limit given by the selection block 17. When in operation, the controller compares the inputted values and when the actual output power $_{PEl\_act}$ is higher than the limit, the controller lowers its output and thus reduces the limit value of the output power of the frequency converter. Similarly, when the output of the PI controller gives the maximum rotational speed, when the actual output power is higher than the power limit value, the maximum rotational speed is lowered. The lowering of the rotational speed lowers also the outputted power. The calculated power limit is also dependent on the actual output power and the limit is also changed when the controller changes its output.

Figure 2 shows a block diagram of another embodiment of the invention. The operation of the calculations in blocks 15 and 16 are similar to that of Figure 1 and same numbering is employed in both figures for the same features. The embodiment of Figure 2 differs from the embodiment of Figure 1 in that the rotational speed of the load is directly limited to limit the output power and thereby the to limit the supply current. The PI controller of Figure 2 receives a difference between the actual output power $P_{El\_act}$ and the calculated output power limit $P_{Elim}$ calculated in block 33. Further, the PI controller receives a zero value as a reference 31. As a zero is given as the reference, the PI controller acts to change its output such that the output power will equal the output power limit. The output of the PI controller is fed to a summation block 32 which receives also speed reference 30 given by the user. The output of the PI controller is limited to negative values only, and therefore the PI controller may reduce the user given speed reference to a lower value, and this limited speed reference is given as the speed reference value to the frequency converter.

If user given speed reference is such that the actual output power increases above the output power limit calculated in block 15 or 16, the PI controller lowers its output and thus the speed reference given to the frequency converter. The lowered speed lowers the output power of the frequency converter such that the output power does not exceed the given limit. The output power limit is also changed due to the calculation carried out in block 16. In practice, the control system keeps the actual output power in the limit when controller changes the rotational speed. Thereby the supply current will also be at the limit value when the controller limits the rotational speed.

The embodiment of Figure 2 may be used when the frequency converter is in rotational speed control mode, i.e. the rotation speed of the load is controlled with the frequency converter. The embodiment of Figure 1 may be used when a maximum power limit or maximum rotational speed limit can be given to the frequency converter

According to the invention a frequency converter comprises means adapted to provide a supply current limit, means adapted to determine the DC-link voltage of the frequency converter, means adapted to determine the output power of the frequency converter, means adapted to determine an output power limit based on the supply current limit, the determined DC link voltage and the determined output power, and means adapted to limit the output power of the frequency converter to the determined output power limit for limiting the supply current to the provided supply current limit.

The means adapted to provide a supply current limit is, for example, a user interface of the frequency converter which enables to set parameters for the device. Further, means adapted to determine the DC link voltage and output power of the frequency converter may comprise measurement circuits or estimation circuits. As mentioned, DC link voltage and the output power of the frequency converter are commonly determined in frequency converters and the determination of the values may be carried out with any known manner.

The means adapted to determine the output power limit may comprise a processor or similar which is able to carry out calculation operations. Frequency converters have typically processing capacity for carrying out calculations relating to internal operations. The same processing capacity may be employed for the purpose of the invention also. The mans adapted to limit the output power comprises typically a control circuit which provides a reference value or a limit value to the frequency converter. The output power limitation may be carried out by limiting the power that the frequency converter is allowed to produce or the rotational speed with which the frequency converter controls the load.

It will be obvious to a person skilled in the art that, as the technology advances, the inventive concept can be implemented in various ways. The invention and its embodiments are not limited to the examples described above but may vary within the scope of the claims.

## Claims

1.    A method of limiting supply current of a frequency converter, the method comprising
providing a supply current limit,
determining the DC-link voltage of the frequency converter,
determining the output power of the frequency converter,
determining an output power limit based on the supply current limit, the determined DC link voltage and the determined output power, and
limiting the output power of the frequency converter to the determined output power limit for limiting the supply current to the provided supply current limit.

2.    A method according claim 1, wherein the limiting of the output power of the frequency converter comprises providing a limit value for the output power to the frequency converter.

3.    A method according to claim 2, wherein providing the limit value comprises
feeding the determined output power and the determined output power limit to a controller, and
providing a limit value based on the difference between the inputs of the controller to be used as power limit in the frequency converter.

4.    A method according claim 1, wherein the limiting of the output power of the frequency converter comprises providing a maximum value for the rotational speed of the load of the frequency converter.

5.    A method according to claim 4, wherein providing the maximum for the rotational speed comprises
feeding the determined output power and the determined output power limit to a controller, and
providing a maximum value for the rotational speed based on the difference between the inputs of the controller to be used as maximum rotational speed limit in the frequency converter

6. A method according to claim 1, wherein a speed reference is provided for the load of the frequency converter and limiting the output power of the frequency converter comprises
limiting the speed reference on the basis of the determined output power and the determined output power limit.

7. A method according to claim 6, wherein the limiting of the speed reference comprises,
feeding the determined output power and the determined output power limit to a controller,
adding the output of the controller to the speed reference to obtain a limited speed reference, and
providing the limited speed reference to the frequency converter.

8. A frequency converter comprising
means adapted to provide a supply current limit,
means adapted to determine the DC-link voltage of the frequency converter,
means adapted to determine the output power of the frequency converter,
means adapted to determine an output power limit based on the supply current limit, the determined DC link voltage and the determined output power, and
means adapted to limit the output power of the frequency converter to the determined output power limit for limiting the supply current to the provided supply current limit.

FIG 1

FIG 2

Europäisches
Patentamt

European
Patent Office

Office européen
des brevets

## EUROPEAN SEARCH REPORT

Application Number

EP 19 21 7030

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2008 109846 A (TOSHIBA CARRIER KK) 8 May 2008 (2008-05-08) | 1-8 | INV. H02M1/32 |
| Y | * paragraph [0002]; figures 8,9 * * paragraph [0023] - paragraph [0024] * * paragraph [0035] - paragraph [0040] * * paragraph [0047] * | 1-8 | H02M5/458 H02M5/42 H02M5/45 H02M7/06 H02M7/5387 |
| Y | US 2017/207740 A1 (HARGIS COLIN [GB]) 20 July 2017 (2017-07-20) * paragraph [0005]; figures 1-3 * * paragraph [0014] * * paragraph [0049] - paragraph [0056] * | 1-8 | H02P29/024 H02P29/028 |
| A | JP 2006 158089 A (DENSO CORP) 15 June 2006 (2006-06-15) * paragraph [0023]; figure 1 * * paragraph [0033] * * paragraph [0042] * * paragraph [0048] - paragraph [0050] * | 1-8 | |

-----

-----

-----

TECHNICAL FIELDS
SEARCHED      (IPC)

H02M
H02P

The present search report has been drawn up for all claims

| Place of search | Date of completion of the search | Examiner |
|---|---|---|
| The Hague | 27 April 2020 | Gusia, Sorin |

## ANNEX TO THE EUROPEAN SEARCH REPORT
## ON EUROPEAN PATENT APPLICATION NO.

EP 19 21 7030

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2020

| Patent document cited in search report | | Publication date | Patent family member(s) | | Publication date |
|---|---|---|---|---|---|
| JP 2008109846 | A | 08-05-2008 | JP 5024827 | B2 | 12-09-2012 |
| | | | JP 2008109846 | A | 08-05-2008 |
| US 2017207740 | A1 | 20-07-2017 | CN 105430836 | A | 23-03-2016 |
| | | | EP 2999110 | A1 | 23-03-2016 |
| | | | GB 2530293 | A | 23-03-2016 |
| | | | US 2016079902 | A1 | 17-03-2016 |
| | | | US 2017207740 | A1 | 20-07-2017 |
| JP 2006158089 | A | 15-06-2006 | NONE | | |

EPO FORM P0459

For more details about this annex : see Official Journal of the European Patent Office, No. 12/82